(19) Europäisches Patentamt
European Patent Office
Office européen des brevets

(11) **EP 4 293 442 A1**

(12) **EUROPEAN PATENT APPLICATION**
published in accordance with Art. 153(4) EPC

(43) Date of publication:
**20.12.2023 Bulletin 2023/51**

(21) Application number: **21929581.3**

(22) Date of filing: **11.03.2021**

(51) International Patent Classification (IPC):
***G05B 19/05*** (2006.01)

(52) Cooperative Patent Classification (CPC):
**G05B 19/05**

(86) International application number:
**PCT/CN2021/080259**

(87) International publication number:
**WO 2022/188103 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **WU, Tengfei
Nanjing, JiangsSu 210000 (CN)**
• **BOVENSIEPEN, Daniel
Beijing 100102 (CN)**

• **ZHU, Jiaxing
Wuxi, JiangSu 214131 (CN)**
• **WANG, Peipei
Wuxi, Jiangsu 214000 (CN)**
• **GAN, Shanshan
Wuxi, Jiangsu Province 214122 (CN)**
• **LIU, Yi
Wuhan, Hubei 430015 (CN)**
• **LIN, Yan
Wuxi, Jiangsu 214134 (CN)**

(74) Representative: **Isarpatent
Patent- und Rechtsanwälte
Barth Hassa Peckmann & Partner mbB
Friedrichstraße 31
80801 München (DE)**

(54) **DATA ACQUISITION METHOD AND APPARATUS, CALCULATION DEVICE, AND STORAGE MEDIUM**

(57) The present disclosure relates to a data acquisition method and apparatus, a calculation device, and a storage medium. The data acquisition method comprises: generating a list of data points to be acquired from a field device; separately performing the following operations for each data point in the list: parsing the address of the data point and determining values of a region type, a DP offset, a byte offset, and a bit offset in the address; calculating a sorting indicator of the data point according to the values of the region type, the DB offset, the byte offset, and the bit offset by using a first predetermined rule; calculating a grouping indicator of the data point according to the values of the region type, the DB offset, and the byte offset by using a second predetermined rule; sorting all the data points according to the calculated sorting indicator of each data point; dividing all the sorted data points into a plurality of groups on the basis of the grouping indicator and a byte length of each data point and the length of a protocol data unit of the filed device; and sending to the field device a data request for each group of data points.

100

S102

S104

S106

S108

S110

Fig. 1

EP 4 293 442 A1

**Description**

**Technical field**

The present disclosure relates generally to the technical field of digital factories, in particular to a data acquisition method and apparatus, a calculation device and a storage medium.

**Background art**

In order to realize Industry 4.0, the transmission of field device data to IT systems and/or industrial clouds to achieve data transparency is very important. There are different types of field devices, including sensors, PLCs (programmable logic controllers), CNC (numerically controlled lathes) and other devices, with different types of field devices having their own communication protocols. When it is necessary to acquire large numbers of data points from field devices, the question of how to improve communication efficiency for different devices is important. In the prior art, many industrial gateways support data acquisition from field devices, but at the present time there is no universal data acquisition method capable of acquiring data in an optimal way.

**Summary of the invention**

A brief summary of the present invention is given below, in order to provide a basic understanding of certain aspects of the present invention. It should be understood that this summary is not an exhaustive summary of the present invention. It is not intended to determine key or important parts of the present invention, nor is it intended to define the scope of the present invention. Its aim is merely to set out some concepts in simplified form, and thus serve as a preamble to the more detailed description discussed later. In view of the above, the present invention proposes a data acquisition method which acquires data points from a field device more efficiently.

According to one aspect of the present disclosure, a data acquisition method is provided, comprising: generating a list of data points to be acquired from a field device; performing the following operations for each data point in the list separately: parsing an address of the data point, and determining values of a region type, a DB offset, a byte offset and a bit offset in the address; using a first predetermined rule to calculate a sorting indicator of the data point according to the values of the region type, the DB offset, the byte offset and the bit offset; using a second predetermined rule to calculate a grouping indicator of the data point according to the values of the region type, the DB offset and the byte offset; sorting all of the data points according to the calculated sorting indicator of each data point; dividing all of the sorted data points into multiple groups on the basis of the grouping indicator and a byte length of each data point and the length of a protocol data unit of the field device; and sending a data request for each group of data points.

In this way, the number of data requests can be reduced, improving the communication efficiency.

Optionally, in one example of the above aspect, the step of dividing all of the sorted data points into multiple groups comprises: traversing all data points starting from a first data point, separately calculating the sum of byte lengths of all groups for different grouping methods while ensuring that the byte length of each group into which the data points are divided is less than or equal to the length of the protocol data unit and the number of groups into which the data points are divided is minimal, and grouping the data points using the grouping method for which the sum of the byte lengths is minimal.

In this way, the overall payload byte length can be reduced, further improving the communication efficiency.

Optionally, in one example of the above aspect, the first predetermined rule is: sorting indicator = region type << 48 + DB offset << 32 + byte offset * 8 * data unit + bit offset, wherein the data unit means the byte actually changed when the byte offset of the address of the field device changes by 1.

Optionally, in one example of the above aspect, the second predetermined rule is: grouping indicator = region type << 48 + DB offset << 32 + byte offset * data unit, wherein the data unit means the byte size actually changed when the byte offset of the address of the field device changes by 1.

According to another aspect of the present disclosure, a data acquisition apparatus is provided, comprising: a data point list generating unit, configured to generate a list of data points to be acquired from a field device; a data point information processing unit, configured to perform the following operations for each data point in the list: parsing an address of the data point, and determining values of a region type, a DB offset, a byte offset and a bit offset in the address; using a first predetermined rule to calculate a sorting indicator of the data point according to the values of the region type, the DB offset, the byte offset and the bit offset; using a second predetermined rule to calculate a grouping indicator of the data point according to the values of the region type, the DB offset and the byte offset; a data point sorting unit, configured to sort all of the data points according to the calculated sorting indicator of each data point; a data point grouping unit, configured to divide all of the sorted data points into multiple groups on the basis of the grouping indicator and a byte length of each data point and the length of a protocol data unit of the field device; and a data request unit, configured to send a data acquisition request for each group of data points.

Optionally, in one example of the above aspect, the data point grouping unit is further configured to: traverse all data points starting from a first data point, calculate the sum of byte lengths of all groups for different grouping methods while ensuring that the byte length of each group into which the data points are divided is less than or equal to the length of the protocol data unit and the number of groups into which the data points are divided is minimal, and group the data points using the grouping method for which the sum of the byte lengths is minimal.

According to another aspect of the present disclosure, a computing device is provided, comprising: at least one processor; and a memory coupled to the at least one processor, the memory being used to store an instruction, wherein, when the instruction is executed by the at least one processor, the processor is caused to execute the method described above.

According to another aspect of the present disclosure, a non-transitory machine-readable storage medium is provided, storing an executable instruction which, when executed, causes the machine to execute the method described above.

According to another aspect of the present disclosure, a computer program is provided, comprising a computer-executable instruction which, when executed, causes at least one processor to execute the method described above.

According to another aspect of the present disclosure, a computer program product is provided, tangibly stored on a computer-readable medium and comprising a computer-executable instruction which, when executed, causes at least one processor to execute the method described above.

The data acquisition method and apparatus according to the present invention define a data general-purpose model capable of describing data points of different field devices; based on information extracted from data points, multiple data points are divided into groups, and a group of data points is merged in one data request, so the number of data requests can be reduced, thereby improving the communication efficiency. Furthermore, the method that minimizes the sum of the byte lengths of all of the groups into which the data points are divided is chosen for grouping the data points, making it possible to reduce the number of invalid bytes included in the data request, thereby further improving the communication efficiency. The method and apparatus according to the present invention take full account of the similarities and differences between data points of different devices, so have very good compatibility.

**Brief description of the drawings**

By referring to the description of embodiments of the present invention in conjunction with the drawings, it will be easier to understand the above and other objectives, characteristics and advantages of the present invention. The components in the drawings are merely intended to show the principles of the present invention. In the drawings, identical or similar technical features or components will be indicated using identical or similar reference labels. In the drawings:

Fig. 1 is a flow chart of an exemplary process of a data acquisition method 100 according to embodiments of the present invention.

Fig. 2 is a block diagram of an exemplary configuration of a data acquisition apparatus 200 according to embodiments of the present invention.

Fig. 3 shows a block diagram of a calculation device 300 for realizing data acquisition according to embodiments of the present disclosure.

The reference labels are as follows:

| | | | |
|---|---|---|---|
| 100: | data acquisition method | S101, S104, S106, S108 and S110: | steps |
| 200: | data acquisition apparatus | 202: | data point list generating unit |
| 204: | data point information processing unit | 206: | data point sorting unit |
| 208: | data point grouping unit | 210: | data request unit |
| 300: | computing device | 302: | processor |
| 304: | memory | | |

**Detailed description of the invention**

The subject matter described herein is now discussed with reference to exemplary embodiments. It should be understood that these embodiments are discussed merely in order to enable those skilled in the art to better understand and thereby implement the subject matter described herein, without limiting the protection scope, applicability or examples expounded in the claims. The functions and arrangement of the discussed elements may be changed without departing from the scope of protection of the content of the present disclosure. In all of the examples, various processes or components may be omitted, substituted or added as required. For example, the described methods may be executed in a different order from that described, and various steps may be added, omitted or combined. Furthermore, features described in relation to some examples may also be combined in other examples.

As used herein, the term "comprising" and variants thereof represent open terms, meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions may be included below, either explicitly or implicitly. Unless clearly stated in the context, the definition of a term is consistent throughout the Description.

To solve the abovementioned problem, the present invention proposes a data acquisition method which acquires data points from a field device more efficiently.

Acquisition of data from a field device is generally based on socket communication, comprising two steps: 1) sending a data request to the field device; 2) reading a data response from the field device. A user can obtain data of various data points of the field device by these two steps. Data points are variables stored in the field device which have a physical meaning, e.g. temperature, humidity, etc. The data acquisition method according to the present disclosure can merge multiple data points in a single data request, and can thus reduce the number of data requests sent to the field device, thereby improving the communication efficiency.

According to the present disclosure, improving the communication efficiency comprises two aspects: firstly, reducing the number of data requests as much as possible; and having achieved this, further reducing the overall payload byte length. To reduce the number of data requests, data points having similar addresses in the device internal memory can be merged into a single data request. In the present disclosure, a data point model is proposed that is capable of describing data points of different devices, the data point model comprising information capable of describing the similarity of data point addresses.

The data point model defined in the present disclosure may for example comprise information such as data point names, data point addresses, source data types, destination data types and data transformations. The specific meanings of each of these items of information are explained below.

- Data point names:
  Used to identify data points, with different data points having different data point names.
- Data point addresses:
  Used to address data points in field devices. Different devices might have different data point address definitions. In the present disclosure, the following method is used to describe data point addresses, with a single data point address comprising the attributes: region type, DB offset, byte offset and bit offset.

  > Region type:
  Different devices might have different region type definitions. For example, in the case of a Modbus device, region type indicates a workstation ID of the device; in the case of a PLC device, region type indicates different data regions, e.g. M, I, Q and DB regions in some PLCs.
  > DB offset:
  DB offset may also have different meanings for different devices. For example, in a Modbus device, DB offset represents object type, e.g. coil, discrete input, holding register and input register, etc.; in the some PLCs, DB offset indicates DB offset number, e.g. DB1, DB2; and in other PLCs, the DB offset may be set to 0.
  > Byte offset:
  Byte offset represents byte offset in a DB, or byte offset in a data region when the DB offset is 0.
  > Bit offset:
  Bit offset indicates bit offset in a byte.

- Source data types:
  Source data types indicate data types defined in a single field device, wherein the data types defined in the same field device are generally the same, e.g. bool, char, byte, short, int, word, dword, long, string, etc. The byte length of a single data point may be determined according to source data type.
- Destination data types:

Data types defined in an IT system or cloud platform, wherein data types are generally the same in the same IT system or cloud platform, e.g. bool, int, double, long, string, etc.

• Data transformations:
Data read from a field device is generally in the form of a byte array, and meaningful data needs to be extracted from the byte array by linear transformation or square transformation.

Based on a start address of a stored data point determined from a data point address and a byte length of a data point determined from a source data type, the storage position of a data point can be determined. Thus, the data point model at least comprises two items of information: data point address, and source data type. Optionally, the data point model may also comprise information such as data point name, destination data type and data transformation.

As stated above, data of a large number of data points might need to be acquired from a field device; the method according to embodiments of the present disclosure can group these multiple data points, and include a request for a group of multiple data points in a single data request, and can thus reduce the number of data requests and improve the communication efficiency.

The data acquisition method and apparatus according to embodiments of the present disclosure are described below with reference to the drawings.

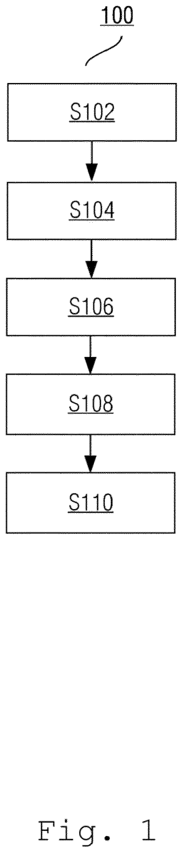

Fig. 1 is a flow chart of an exemplary process of a data acquisition method 100 according to embodiments of the present invention.

Firstly, in step S102, a list of data points to be acquired from a field device is generated.

The list comprises information of multiple data points which a user wishes to acquire from the field device.

In one specific example, an edge device may have an engineering tool to configure a list of data points to be acquired from the field device. The engineering tool may for example be a Web user interface or a PC client, etc. Each data point in the generated data point list conforms to the data point model defined above.

Next, in step S104, the following operations are performed for each data point in the list separately.

Firstly, an address of the data point is parsed, to determine values of region type, DB offset, byte offset and bit offset in the address.

The address of the data point in the data point list is a string indicating address information; by parsing this string, values of the attributes mentioned above can be obtained.

For example, taking a Modbus device as a specific example, a data point in the Modbus device has the address 1.40001.1, and by parsing this address, attribute values of the data point address can be obtained as follows:

Region type = 1 (workstation ID)
DB offset = 4 (holding register)
Byte offset = 1
Bit offset = 1

Next, a sorting indicator may be calculated according to the values of region type, DB offset, byte offset and bit offset.

In a specific example, the sorting indicator is defined as a 64-bit number, and the following formula is used to calculate the sorting indicator of the data point.

```
Sorting indicator = region type << 48 + DB offset << 32 +
byte offset * 8 * data unit + bit offset
```

Here, the symbol "<<" means that a value is moved n bits to the left for storage, and "data unit" means the byte size actually changed when the byte offset of the address of the field device changes by 1. The data units of different field devices might be different; for example, in some devices, when the byte offset of the address changes by 1, it actually changes by 1 byte, while in other devices, when the byte offset of the address changes by 1, it actually changes by 2 bytes, so the byte offset if multiplied by one data unit when calculating the sorting indicator.

In this way, a 64-bit number indicating the sorting indicator of the address can be obtained.

Those skilled in the art will understand that another formula could also be used to calculate the sorting indicator; there is no restriction to the formula shown in the specific example above. The sorting indicator is calculated on the basis of the values of region type, DB offset, byte offset and bit offset, so may be used to assess the similarity between different data point addresses.

Next, a grouping indicator may be calculated according to the values of region type, DB offset and byte offset.

In a specific example, the grouping indicator is also defined as a 64-bit number, and the following formula is used to calculate the grouping indicator of the data point.

```
Grouping indicator = region type << 48 + DB offset << 32 +
byte offset * data unit
```

The grouping indicator is information that can be used when grouping data points, and does not include bit information in the address, because bit information is not taken into account when grouping is performed; as before, the byte offset in this case is also multiplied by the data unit. Next, in step S106, all data points are sorted according to the calculated sorting indicator of each data point.

Preferably, all data points are sorted in ascending order of data point address. Thus, after being sorted, the data points are arranged sequentially in order of address from small to big.

Then in step S108, all of the sorted data points are divided into multiple groups on the basis of the grouping indicator and byte length of each data point and the length of a protocol data unit of the field device.

Specifically, all of the sorted data points may be grouped in the following way.

It will be understood that field devices using different communication protocols might have different PDU lengths, and each field device has its standard PDU (protocol data unit) length. Firstly, the PDU length of the field device that is to receive a data request is determined; when the data points are grouped, the byte length of each group cannot be greater than the PDU length.

Secondly, in order to minimize the number of times that data requests are sent, the number of groups into which all of the data points are divided must be minimized.

Finally, the sum of the byte lengths of all groups is minimized, while satisfying the two points above.

Addresses between the addresses of two adjacent data points store invalid data unrelated to the data to be requested; such addresses are invalid, and if a large number of such invalid addresses are included in the data request sent to the field device, the data obtained will include a large amount of invalid data, so the communication efficiency is reduced. Thus, it is hoped that the data request, as far as possible, includes no invalid addresses or only a small number of invalid addresses. By minimizing the sum of the byte lengths of all of the groups into which the data points are divided, a situation can be achieved in which as few invalid addresses as possible are included in all of the data point groups, and in this way the communication efficiency can be further improved.

Suppose that N data points 1 - N are included in the data point list, and the data points are divided into M groups.

Suppose that the mth group (m being one of 1 - M) starts at data point S and ends at data point E; then the byte length of group m is: grouping indicator of data point E + byte length of data point E - grouping indicator of data point S.

By means of the above formula, the byte length of each group can be calculated, and the sum of the byte lengths of all groups can then be calculated.

All of the data points are traversed, starting from the first data point, and the sum of the byte lengths of all groups is separately calculated for different grouping methods while ensuring that the byte length of each group into which the data points are divided is less than or equal to the PDU length and the number of groups into which the data points are divided is minimal, and finally, the grouping method for which the sum of the byte lengths is minimal is used to group the data points.

Those skilled in the art can realize the abovementioned optimal grouping method by using a mathematical method such as an optimization algorithm; no further details are given here.

Finally, in step S110, a data request for each group of data points is sent to the field device.

For each group, it is possible to know the address of a starting data point and the total byte length from the starting data point to an end data point; based on these two parameters, the data points of one group may be merged in a read request to send a data request to the field device.

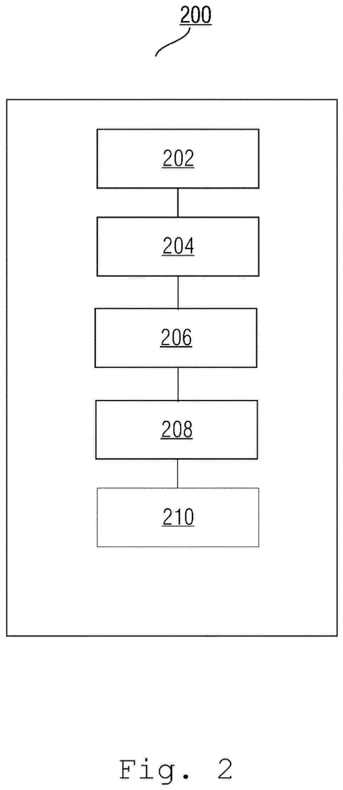

Fig. 2 is a block diagram of an exemplary configuration of a data acquisition apparatus 200 according to embodiments of the present invention.

As shown in Fig. 2, the data acquisition apparatus 200 comprises: a data point list generating unit 202, a data point information processing unit 204, a data point sorting unit 206, a data point grouping unit 208 and a data request unit 210.

The data point list generating unit 202 is configured to generate a list of data points to be acquired from a field device.

The data point information processing unit 204 is configured to perform the following operations for each data point in the list:

parsing an address of the data point, and determining values of a region type, a DB offset, a byte offset and a bit offset in the address;
using a first predetermined rule to calculate a sorting indicator of the data point according to the values of the region type, the DB offset, the byte offset and the bit offset;
using a second predetermined rule to calculate a grouping indicator of the data point according to the values of the region type, the DB offset and the byte offset.

The data point sorting unit 206 is configured to sort all data points according to the calculated sorting indicator of each data point.

The data point grouping unit 208 is configured to divide all of the sorted data points into multiple groups on the basis of the grouping indicator and byte length of each data point and the length of a protocol data unit of the field device.

The data request unit 210 is configured to send a data acquisition request for each group of data points.

Preferably, the data point grouping unit 208 is further configured to: traverse all data points starting from a first data point, calculate the sum of the byte lengths of all of the groups for different grouping methods while ensuring that the byte length of each group into which the data points are divided is less than or equal to the length of the protocol data unit and the number of groups into which the data points are divided is minimal, and group the data points using the grouping method for which the sum of the byte lengths is minimal.

```
The first predetermined rule is: sorting indicator = region
type << 48 + DB offset << 32 + byte offset * 8 * data unit
+ bit offset.


The second predetermined rule is: grouping indicator = region
type << 48 + DB offset << 32 + byte offset * data unit.
```

The "data unit" means the byte size actually changed when the byte offset of the address of the field device changes by 1.

It must be explained that the structure of the data acquisition apparatus 200 and the component units thereof shown in Fig. 2 are merely exemplary, and those skilled in the art could amend the structural block diagram shown in Fig. 2 as needed.

The details of the operations and functions of the various parts of the data acquisition apparatus 200 may for example be the same as or similar to the relevant parts of the embodiment of the data acquisition method 100 of the present disclosure described with reference to Fig. 1, so a detailed description is not repeated here.

The data acquisition method and apparatus according to the present invention define a data general-purpose model capable of describing data points of different field devices; based on information extracted from data points, multiple data points are divided into groups, and a group of data points is merged in one data request, so the number of data requests can be reduced, thereby improving the communication efficiency. Furthermore, the method that minimizes the sum of the byte lengths of all of the groups into which the data points are divided is chosen for grouping the data points, making it possible to reduce the number of invalid bytes included in the data request, thereby further improving the communication efficiency.

The method and apparatus according to the present invention take full account of the similarities and differences between data points of different devices, so have very good compatibility.

The data acquisition method and apparatus according to embodiments of the present disclosure have been described above with reference to Figs. 1 and 2. The various units of the data acquisition apparatus described above may be realized using hardware, software, or a combination of hardware and software.

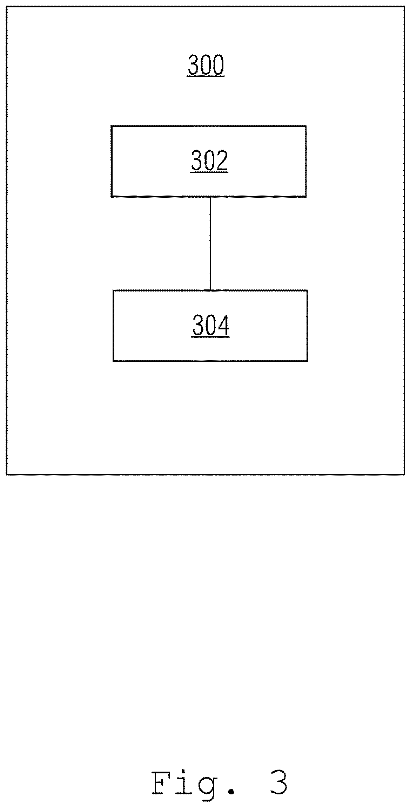

Fig. 3 shows a block diagram of a calculation device 300 for realizing data acquisition according to embodiments of the present disclosure. According to an embodiment, the calculation device 300 may comprise at least one processor 302, which processor 302 executes at least one computer-readable instruction (i.e. the abovementioned element realized in the form of software) encoded or stored in a computer-readable storage medium (i.e. a memory 304).

It should be understood that a computer-executable instruction stored in the memory 304, when executed, causes the at least one processor 302 to perform the various operations and functions described above with reference to Figs. 1 - 2 in various embodiments of the present disclosure.

According to an embodiment, a non-transitory machine-readable medium is provided. The non-transitory machine-readable medium may have a machine-executable instruction (i.e. the abovementioned element realized in the form of software) which, when executed by a machine, causes the machine to perform the various operations and functions described above with reference to Figs. 1 - 2 in various embodiments of the present disclosure.

According to an embodiment, a computer program is provided, comprising a computer-executable instruction which, when executed, causes at least one processor to perform the various operations and functions described above with reference to Figs. 1 - 2 in various embodiments of the present disclosure.

According to an embodiment, a computer program product is provided, comprising a computer-executable instruction which, when executed, causes at least one processor to perform the various operations and functions described above with reference to Figs. 1 - 2 in various embodiments of the present disclosure.

It should be understood that the various embodiments herein are all described progressively; for parts that are the same or similar in different embodiments, one embodiment may serve as a reference for another embodiment and vice versa, and each embodiment primarily describes features that differ from other embodiments. For example, the embodiment relating to the apparatus, the embodiment relating to the calculation device and the embodiment relating to the machine-readable storage medium above are described in relatively simple terms because they are essentially similar to the method embodiment; for related parts, it is sufficient to refer to part of the description of the method embodiment.

Specific embodiments of this Description have been described above. Other embodiments are within the scope of the attached claims. In some cases, actions or steps recorded in the claims may be performed in a different order from that in the embodiments and still achieve the desired result. Furthermore, the processes depicted in the drawings do not necessarily require the specific order or consecutive order shown to achieve the desired result. In some embodiments, multi-task processing and parallel processing are also possible or possibly advantageous.

In each of the processes and each of the system structural diagrams above, not all of the steps and units are necessary; some steps or units may be omitted according to actual needs. The apparatus structures described in the embodiments above may be physical structures or logic structures, i.e. some units might be realized by the same physical entity, or some units might be realized by multiple physical entities separately, or may be realized jointly by certain components in multiple independent devices.

The particular implementations expounded above with reference to the drawings describe exemplary embodiments, but do not represent all embodiments that can be realized or that fall within the scope of protection of the claims. The term "exemplary" used throughout this Description means "used as an example, instance or illustration", but does not mean "preferred" or "advantageous" over other embodiments. In order to provide an understanding of the described technology, particular implementations include specific details. However, these technologies can be implemented without these specific details. In some instances, to avoid making the concept of the described embodiments difficult to understand, commonly known structures and apparatuses are shown in the form of block diagrams.

The above description of the content of the present disclosure is provided to enable any person skilled in the art to realize or use the content of the present disclosure. To a person skilled in the art, various amendments to the content of the present disclosure will be obvious, and the general principles defined herein may be applied to other variants without departing from the scope of protection of the content of the present disclosure. Thus, the content of the present disclosure is not limited to the examples and designs described herein, but rather is consistent with the broadest scope corresponding to the principles and novel features disclosed herein.

The above are merely preferred embodiments of the present invention, which are not used to limit the present invention. Any amendments, equivalent substitutions or improvements, etc. made within the spirit and principles of the present invention should be included in the scope of protection of the present invention.

**Claims**

1. A data acquisition method, comprising:

    generating a list of data points to be acquired from a field device;
    performing the following operations for each data point in the list separately:

        parsing an address of the data point, and determining values of a region type, a DB offset, a byte offset and a bit offset in the address;
        using a first predetermined rule to calculate a sorting indicator of the data point according to the values of the region type, the DB offset, the byte offset and the bit offset;
        using a second predetermined rule to calculate a grouping indicator of the data point according to the values of the region type, the DB offset and the byte offset;
        sorting all of the data points according to the calculated sorting indicator of each data point;
        dividing all of the sorted data points into multiple groups on the basis of the grouping indicator and a byte length of each data point and the length of a protocol data unit of the field device; and
        sending a data request for each group of data points to the field device.

2. The method as claimed in claim 1, wherein the step of dividing all of the sorted data points into multiple groups comprises:
    traversing all data points starting from a first data point, separately calculating the sum of byte lengths of all groups for different grouping methods while ensuring that the byte length of each group into which the data points are divided is less than or equal to the length of the protocol data unit and the number of groups into which the data points are divided is minimal, and grouping the data points using the grouping method for which the sum of the byte lengths is minimal.

3. The method as claimed in claim 1 or 2, wherein the first predetermined rule is:
sorting indicator = region type << 48 + DB offset << 32 + byte offset * 8 * data unit + bit offset, wherein the data unit means the byte size actually changed when the byte offset of the address of the field device changes by 1.

4. The method as claimed in claim 1 or 2, wherein the second predetermined rule is:

```
grouping indicator = region type << 48 + DB offset << 32 +
byte offset * data unit,
```

wherein the data unit means the byte size actually changed when the byte offset of the address of the field device changes by 1.

5. A data acquisition apparatus, comprising:

a data point list generating unit, configured to generate a list of data points to be acquired from a field device;
a data point information processing unit, configured to perform the following operations for each data point in the list:

parsing an address of the data point, and determining values of a region type, a DB offset, a byte offset and a bit offset in the address;
using a first predetermined rule to calculate a sorting indicator of the data point according to the values of the region type, the DB offset, the byte offset and the bit offset;
using a second predetermined rule to calculate a grouping indicator of the data point according to the values of the region type, the DB offset and the byte offset;
a data point sorting unit, configured to sort all of the data points according to the calculated sorting indicator of each data point;
a data point grouping unit, configured to divide all of the sorted data points into multiple groups on the basis of the grouping indicator and a byte length of each data point and the length of a protocol data unit of the field device; and
a data request unit, configured to send a data acquisition request for each group of data points.

6. The apparatus as claimed in claim 5, wherein the data point grouping unit is further configured to:
traverse all data points starting from a first data point, calculate the sum of byte lengths of all groups for different grouping methods while ensuring that the byte length of each group into which the data points are divided is less than or equal to the length of the protocol data unit and the number of groups into which the data points are divided is minimal, and group the data points using the grouping method for which the sum of the byte lengths is minimal.

7. The apparatus as claimed in claim 5 or 6, wherein the first predetermined rule is:

```
sorting indicator = region type << 48 + DB offset << 32 +
byte offset * 8 * data unit + bit offset,
```

wherein the data unit means the byte size actually changed when the byte offset of the address of the field device changes by 1.

8. The apparatus as claimed in claim 5 or 6, wherein the second predetermined rule is:

```
grouping indicator = region type << 48 + DB offset << 32 +
byte offset * data unit,
```

wherein the data unit means the byte size actually changed when the byte offset of the address of the field device changes by 1.

9. A computing device (700), comprising:

at least one processor (702); and
a memory (704) coupled to the at least one processor (702), the memory being used to store an instruction, wherein, when the instruction is executed by the at least one processor (702), the processor (702) is caused to execute the method as claimed in any one of claims 1 - 4.

10. A non-transitory machine-readable storage medium, storing an executable instruction which, when executed, causes the machine to execute the method as claimed in any one of claims 1 - 4.

11. A computer program, comprising a computer-executable instruction which, when executed, causes at least one processor to execute the method as claimed in any one of claims 1 - 4.

12. A computer program product, tangibly stored on a computer-readable medium and comprising a computer-executable instruction which, when executed, causes at least one processor to execute the method as claimed in any one of claims 1 - 4.

<u>100</u>

```
┌─────────────────┐
│      S102       │
└─────────────────┘
         │
         ▼
┌─────────────────┐
│      S104       │
└─────────────────┘
         │
         ▼
┌─────────────────┐
│      S106       │
└─────────────────┘
         │
         ▼
┌─────────────────┐
│      S108       │
└─────────────────┘
         │
         ▼
┌─────────────────┐
│      S110       │
└─────────────────┘
```

Fig. 1

Fig. 2

Fig. 3

## INTERNATIONAL SEARCH REPORT

| International application No. |
| --- |
| **PCT/CN2021/080259** |

| A. CLASSIFICATION OF SUBJECT MATTER |
| --- |
| G05B 19/05(2006.01)i |
| According to International Patent Classification (IPC) or to both national classification and IPC |

| B. FIELDS SEARCHED |
| --- |
| Minimum documentation searched (classification system followed by classification symbols) |
| G05B |
| Documentation searched other than minimum documentation to the extent that such documents are included in the fields searched |
| Electronic data base consulted during the international search (name of data base and, where practicable, search terms used) |
| CNKI, CNPAT, WPI, EPODOC: 数据, 采集, 数据点, 列表, 地址, 偏移, 分组, 排序, data, collect, PLC, point, list, address, offset, group, order |

| C. DOCUMENTS CONSIDERED TO BE RELEVANT | | |
| --- | --- | --- |
| Category* | Citation of document, with indication, where appropriate, of the relevant passages | Relevant to claim No. |
| A | CN 108037725 A (WISDRI ENGINEERING & RESEARCH INCORPORATION LIMITED COMPANY) 15 May 2018 (2018-05-15) <br> entire document | description, paragraphs [0040]-[0066] |
| A | CN 112286706 A (BEIJING UNIVERSITY OF POSTS AND TELECOMMUNICATIONS) 29 January 2021 (2021-01-29) <br> entire document | 1-12 |
| A | US 2018322400 A1 (SERVICENOW, INC.) 08 November 2018 (2018-11-08) <br> entire document | 1-12 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 November 2021** | **08 December 2021** |

| Name and mailing address of the ISA/CN | Authorized officer |
| --- | --- |
| China National Intellectual Property Administration (ISA/CN) <br> No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/080259**

| Patent document cited in search report | | | Publication date (day/month/year) | Patent family member(s) | Publication date (day/month/year) |
|---|---|---|---|---|---|
| CN | 108037725 | A | 15 May 2018 | None | |
| CN | 112286706 | A | 29 January 2021 | None | |
| US | 2018322400 | A1 | 08 November 2018 | None | |

Form PCT/ISA/210 (patent family annex) (January 2015)